# EUROPÄISCHE PATENTANMELDUNG

(11) **EP 4 390 801 A1**
(43) Veröffentlichungstag der Anmeldung: **26.06.2024**
(21) Anmeldenummer: 23216220.6
(22) Anmeldetag: 13.12.2023
(51) Int. Cl.: G06Q 10/0639

(54) **VERFAHREN ZUM BEREITSTELLEN VON KENNZAHLEN FÜR EINEN BENUTZER WENIGSTENS EINES ELEKTROWERKZEUGS**

(30) Priorität: 21.12.2022 DE 102022214205
(71) Anmelder: Robert Bosch GmbH, 70442 Stuttgart (DE)
(72) Erfinder: Koegel, Jan, 86441 Zusmarshausen (DE); Bedi, Amandeep, 70794 Filderstadt (DE); Altun, Cankal, 70567 Stuttgart (DE); Marupaka, Abhimanyu Sharma, 70771 Leinfelden-Echterdingen (DE)

(57) **Zusammenfassung**

Die Erfindung betrifft ein Verfahren (100) zum Bereitstellen von Kennzahlen für einen Benutzer wenigstens eines Elektrowerkzeugs, umfassend die nachfolgenden Schritte:
- Sammeln (101) von Datenwerten bezüglich des wenigstens einen Elektrowerkzeugs und/oder bezüglich des Benutzers des wenigstens einen Elektrowerkzeugs, wobei die Datenwerte zumindest teilweise einer Tätigkeit des Benutzers mit dem wenigstens einen Elektrowerkzeug zugeordnet sind,
- Ermitteln (102) wenigstens einer Kennzahl für den Benutzer auf Basis der gesammelten Datenwerte und einer Auswertungsfunktion (7), wobei die Kennzahl für die Qualität der Tätigkeiten des Benutzers mit dem wenigstens einen Elektrowerkzeug spezifisch ist,
- Ausgeben (103) der ermittelten wenigstens einen Kennzahl für den Benutzer.

## Beschreibung

Die vorliegende Erfindung betrifft ein Verfahren zum Bereitstellen von Kennzahlen für einen Benutzer wenigstens eines Elektrowerkzeugs. Ferner bezieht sich die Erfindung auf ein Computerprogramm sowie eine Vorrichtung zu diesem Zweck.

### Stand der Technik

Bei Bauprojekten kann es eine mühsame Aufgabe sein, das richtige Handwerkspersonal mit ausreichender Kompetenz und vertrauenswürdiger Erfahrung zu finden. Zumeist wird bei der Suche für ein bestimmtes Projekt dabei auf Portale, Anzeigen oder Telefonate zurückgegriffen, um einen geeigneten Handwerker zu einem fairen Preis auszuwählen. Allerdings sind die verfügbaren Informationen oder auch Referenzen hinsichtlich der Qualifikation und handwerklichen Erfahrung nicht immer glaubwürdig oder zutreffend. Daher mangelt es aus Kundensicht oft an zuverlässigen und belastbaren Bewertungen von Handwerkern, um den Kunden nachweislich mit einer entsprechend verlässlichen Handwerker-Kompetenz und fairer Preisgestaltung zu überzeugen.

Es sind zwar verschiedene Lösungen zur Authentifizierung von Handwerkern bei der Arbeit mit Elektrowerkzeugen bekannt, aber diese Lösungen können die bekannten Mängel der heutigen Handwerkerportale oder Stellenmärkte für Handwerker nicht beseitigen. Ferner sind aus der US 10,631,120 B2 bekannt, dass Daten von einem Elektrowerkzeug bereitgestellt werden können. Allerdings kann aufgrund der gesammelten Daten keine Bewertung einer handwerklichen Tätigkeit erfolgen.

### Offenbarung der Erfindung

Gegenstand der Erfindung ist ein Verfahren mit den Merkmalen des Anspruchs 1, ein Computerprogramm mit den Merkmalen des Anspruchs 7 sowie durch eine Vorrichtung mit den Merkmalen des Anspruchs 8. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient dabei zum Bereitstellen von Kennzahlen für einen Benutzer wenigstens eines Elektrowerkzeugs, umfassend die nachfolgenden Schritte:
- Sammeln von Datenwerten bezüglich des wenigstens einen Elektrowerkzeugs und/oder bezüglich des Benutzers des wenigstens einen Elektrowerkzeugs. Hierbei ist insbesondere vorgesehen, dass die Datenwerte zumindest teilweise einer Tätigkeit des Benutzers mit dem wenigstens einen Elektrowerkzeug zugeordnet sind,
- Ermitteln wenigstens einer Kennzahl für den Benutzer auf Basis der gesammelten Datenwerte und einer Auswertungsfunktion, wobei die Kennzahl für die Qualität der Tätigkeiten des Benutzers mit dem wenigstens einen Elektrowerkzeug spezifisch ist,
- Ausgeben der ermittelten wenigstens einen Kennzahl für den Benutzer.

Dies hat den Vorteil, dass eine Bewertung oder Einschätzung von Tätigkeiten eines Benutzers eines Elektrowerkzeugs oder eines Handwerkers, deutlich verbessert werden und signifikant transparenter gemacht werden kann. Durch das erfindungsgemäße Verfahren wird ein für den Benutzer und seine Kunden sehr einfach überprüfbares und vertrauenswürdiges Bewertungssystem geschaffen. Der Benutzer eines Werkzeugs oder Handwerker und seine Kunden können damit vorteilhafterweise einfacher und schneller erkennen, welche Qualität der Benutzer bei der Ausführung von handwerklichen Tätigkeiten liefern und bereitstellen kann.

Eine Kennzahl ist auch als eine Vorschrift zur quantitativen und objektiven Messung einer Tätigkeit zu verstehen, die eine Auskunft über einen Status oder eine Leistung gibt. Ferner kann eine Kennzahl für eine Objektivierung von Beurteilungen oder Bewertungen auf Basis vereinbarter Messkriterien sorgen. Die jeweiligen Kennzahlen können auf unterschiedliche Weise miteinander in einem logischen oder hierarchischen Zusammenhang stehen.

Eine Auswertungsfunktion ist als ein Anwendungsprogramm oder als ein Teil eines solchen Programms zur Analyse von Daten zu verstehen. Sie umfasst einen oder mehrere Algorithmen, welche eine Auswertung von Daten ermöglichen können, z.B. eine Kennzahl zu ermitteln. Dafür können für die Auswertungsfunktion ein oder mehrere Kriterien als Variablen der Funktion vorgegeben sein, um eine bestimmte Kennzahl darauf basierend zu ermitteln. D.h. dass ein Computerprogramm oder eines Auswertefunktion des Programms oder eine Auswerteinheit einer Vorrichtung zur Datenverarbeitung eine oder mehrere Kennzahlen ermitteln können.

Ein Ausgeben der Kennzahl kann beispielsweise auf einer Benutzeroberfläche eines Computers oder eines Webbrowsers vorgesehen sein. Optional ist auch denkbar, dass die Kennzahl allein oder als Teil eines Benutzerprofils auf einer Benutzeroberfläche eines Webportals visualisiert werden kann. Das Ausgeben der Kennzahl kann z.B. als Übermittlung oder Übertragung der Kennzahl an eine Anzeigeeinrichtung wie einen Bildschirm oder als Übertragung an eine cloudbasierte oder internetbasierte Einrichtung wie z.B. eine Webportal-Seite erfolgen.

Datenwerte können Messwerte von Elektrowerkzeugen oder Messwerkzeugen oder sogenannten Smart Wearables (Engl.) umfassen. Solch ein Messwert wird mittels eines Sensors oder eines Erfassungsgeräts eines Elektrowerkzeugs gemessen, gegebenenfalls gespeichert und dann von dem Elektrowerkzeug an eine Vorrichtung zur Datenverarbeitung gesendet, um dort dann beispielsweise unter Anwendung eines Programms verarbeitet zu werden. Ebenso können Datenwerte von Datenquellen wie Datenspeicher oder Datenbanken geladen, abgerufen, versendet oder gesammelt werden, um sie dann weiter zu verarbeiten. Bei einem Smart Wearable (Engl.) handelt es sich um eine tragbare Technologie, welche in einem tragbaren Gerät oder auch in einem Kleidungsstück angeordnet sein kann. Smart bedeutet, dass eine solches Gerät über das Internet als Kommunikationsnetz Daten senden und empfangen kann.

Ein Elektrowerkzeug ist im Rahmen dieser Erfindung zu verstehen als ein Werkzeug, dass als handgehaltenes, handgeführtes, transportables oder stationäres Elektrowerkzeug ausgeführt sein kann. Dabei kann das Elektrowerkzeug auch als ein elektronisches Messwerkzeug ausgeführt sein. Ein Elektrowerkzeuge kann leitungsgebunden, d.h. mit einem Stromkabel oder einer direkten Verbindung zum Stromnetz, oder leitungsungebunden, d.h. mit einer Batterie ohne eine direkte Verbindung zum Stromnetz, ausgeführt sein. Elektrowerkzeuge, optional auch digitale Elektrowerkzeuge, können beispielsweise u.a. eine elektrische Bohr- oder Schleifmaschine, Stich- oder Kreissäge, elektrisches Schraubwerkzeug wie z.B. ein Akkuschrauber, elektronisches Entfernungsmessgerät, elektronisches Nivelliergerät, oder ein elektrisches Spannungs- oder Strommessgerät.

Ein Typ des Elektrowerkzeugs kann als eine Art, Klasse oder auch Gattung eines Elektrowerkzeugs verstanden werden. So kann beispielsweise eine Art die handgehaltenen oder handgeführten Elektrowerkzeuge sein, während eine andere Art die Art der stationären Elektrowerkzeuge sein kann. Ferner kann die Art des Elektrowerkzeugs auch ein Messwerkzeug oder -gerät sein.

Es kann optional möglich sein, dass das Ausgeben der ermittelten wenigstens einen Kennzahl den nachfolgenden Schritt umfasst:
- Anzeigen der wenigstens einen Kennzahl auf einer Benutzeroberfläche, wobei die Benutzeroberfläche einen digitalen Zwilling des Benutzers visualisiert.

Dies ermöglicht eine unmittelbare Information des Benutzers durch eine einfachere und schnellere Visualisierung auf der Benutzeroberfläche.

Ein Digitaler Zwilling (Engl.: Digital Twin) kann für ein reales Objekt oder eine reale Person in der digitalen Welt stehen. Es kann sich um materielle oder immaterielle Objekte handeln. Ein Digitaler Zwilling umfasst Daten und Algorithmen und er kann über einen Sensor mit der realen Welt gekoppelt sein. Reale Objekte lassen sich mit Daten und Algorithmen als Digitale Zwillingen abbilden, da sie Eigenschaften und Verhalten eines realen Objekts unter bestimmten Bedingungen beschreiben können. Die abgebildeten Objekte eines Digitalen Zwillings können ein materielles oder immaterielles Objekt wie ein Produkt, eine Dienstleistung oder eine Person aufweisen. Ein Digitaler Zwilling kann ein reales abzubildendes Objekt, einen virtuellen Darstellungsraum und Daten zu den Umgebungsbedingungen umfassen. Ein digitaler Zwilling kann auch als ein oder mehrere Kennzahlen für einen Benutzer eines Elektrowerkzeugs verstanden werden.

Die Kennzahl kann auf einer Benutzeroberfläche, insbesondere auf einer grafischen Benutzeroberfläche, eines Computers oder eines mobilen Endgeräts visuell angezeigt werden. Die Kennzahl kann z.B. auf einem Webbrowser angezeigt werden. Es ist auch möglich, dass die Kennzahl auf einem Web-Portal eines Dienstleisters Dritten über das Internet angezeigt werden kann

Weiter ist im Rahmen der Erfindung denkbar, dass eine computergestützte Autorisierung eines Nutzers durchgeführt wird, um einen Zugang zu der Benutzeroberfläche zu erhalten.

Dies hat den Vorteil, dass die bereitgestellte Kennzahl mit sicherheitssensiblen Daten bezüglich des Benutzers nur einem bestimmten Kreis an Kunden oder Bewertenden bereitgestellt wird und somit dessen Daten besser geschützt sind.

Eine Autorisierung, insbesondere eine computergestützte Autorisierung, ist zu verstehen als ein Erlauben, Zuweisen oder Überprüfen von Zugriffsrechten mittels spezieller Methoden bezüglich interessierter Nutzer zu Daten und zu Diensten. Eine solche Autorisierung kann durch eine Autorisierungseinheit einer Vorrichtung zur Datenverarbeitung erfolgen oder einer Autorisierungskomponente eines Computerprogramms.

Nach einer weiteren Möglichkeit kann vorgesehen sein, dass die vorgegebene Auswertungsfunktion anhand der gesammelten Datenwerte die wenigstens eine Kennzahl ermittelt, wobei vorzugsweise die Kennzahl als wenigstens eine der folgenden Kennzahlen für eine Bewertung der Qualität ausgeführt ist:
- Expertise eines Benutzers mit einem bestimmten Typ eines Elektrowerkzeugs,
- Expertise eines Benutzers für ein bestimmtes Gewerk,
- Flexibilität und Reaktionsfähigkeit eines Benutzers für Projekte unter Zeitdruck,
- Preis-Leistungs-Verhältnis.

Dies hat den Vorteil, dass eine Auswertung eine einfachere und objektivere Bewertung gewährleistet werden kann.

Von Expertise, insbesondere einer fachlichen Expertise, kann gesprochen werden, wenn sich der Benutzer, insbesondere der Handwerker, in seinem Tätigkeitsbereich als Handwerker gut auskennt und spezifische Wissen dafür erworben hat. Dabei kann sich die Expertise beispielsweise durch Kriterien wie Arbeitseffizienz, Fachwissen oder Umsetzungsfähigkeit der Erfahrung des Benutzers, bestimmen lassen.

Ein Gewerk kann als handwerkliche und bautechnische Arbeiten im Bauwesen verstanden werden. Das Gewerk umfasst im Allgemeinen Arbeiten, die einem in sich geschlossenen Bauleistungsbereich zuzuordnen sind... Typische Gewerke können z.B. sein Elektroinstallationsarbeiten, Zimmerer- und Holzbauarbeiten, Trockenbauarbeiten, Metallbau- oder Schmiedearbeiten, Beton- und Stahlbetonarbeiten oder Tischlerarbeiten.

Es kann im Rahmen der Erfindung vorgesehen sein, dass die Auswertungsfunktion die gesammelten Datenwerte auf Basis eines multidimensionalen Datenmodells analysiert und auswertet, wobei eine Dimension die gesammelten Datenwerte aus unterschiedlichen Perspektiven, vorzugsweise Zeit und/oder Region und/oder Unternehmen und/oder Wettbewerb und/oder Branche und/oder Markt, spezifiziert, und/oder dass die Datenwerte aus unterschiedlichen Datenquellen empfangen werden, wobei die Auswertungsfunktion die gesammelten Datenwerte aus den unterschiedlichen Datenquellen für die Auswertung berücksichtigt.

Dies ermöglicht eine umfangreichere, bedeutungsvollere und kompaktere Darstellung von einer Kennzahl zum Qualitätsniveau aus der Auswertung. Ferner hat dies den Vorteil, dass deutlich schneller auf die Daten zugegriffen werden kann und eine Handhabung der Daten für die Auswertung vereinfacht wird.

Ein multidimensionales Datenmodell oder auch mehrdimensionales Datenmodell ist als eine Methode zu verstehen, mit welcher Daten geordnet werden können. Die Grundidee eines multidimensionalen Datenmodells ist die Unterscheidung von Fakten, Dimensionen und Klassifikationshierarchien. Zum besseren Verständnis dient ein mehrdimensionaler Würfel. Fakten sind dabei Punkte im multidimensionalen Raum und Klassifikationshierarchien stellen Achsenbeschriftungen/Koordinaten in unter-schiedlichem Verfeinerungsgrad dar. Dimensionen setzen Kennzahlen in Bezug zu Eigenschaften bzw. sachlichen Kriterien und ermöglichen eine Strukturierung der Daten.

Fakten können dabei z.B. gemessene Werte sein. Eine Dimension hat ein Schema wie beispielsweise nach Zeit mit Tag, Woche, Jahr oder nach Region mit Landkreis, Land, Staat oder nach Produkt wie Produktgruppe, Produktklasse, Produktfamilie und zugehörige Werte. Dimensionen beschreiben somit Daten und ermöglichen den Zugriff auf Kennzahlen. Dimensionen spiegeln eine bestimmte Sichtweise wider, nach der Fakten aufgeschlüsselt werden. Eine Dimension kann somit auch als Betrachtungs-perspektive verstanden werden. Die Dimensionen lassen sich wiederum zu Hierarchien verdichten wie z.B. Monat - Quartal - Jahr. Bei einfachen Hierarchien enthalten die jeweils höheren Hierarchieebenen die aggregierten Datenwerte der jeweils niedrigeren Ebene.

Bevorzugt kann im Rahmen der Erfindung vorgesehen sein, dass die Auswertungsfunktion eine oder mehrere von folgenden Datenminingfunktionen für die Analyse der Datenwerte umfasst: eine Verschlüsselungsfunktion, eine Standardisierungsfunktion, eine Harmonisierungsfunktion, eine Aggregierungsfunktion, eine k-Anonymitätsfunktion oder eine Datenmaskierungsfunktion.

Dies hat den Vorteil, dass durch die Anwendung einer oder mehrerer dieser Funktionen eine zuverlässigere und qualitativ wertvollere Analyse und/oder Bewertung hinsichtlich der Qualität von handwerklichen Tätigkeiten des Benutzers gewährleisten werden kann.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann bspw. eine Datenverarbeitungsvorrichtung vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
Fig.1 a: ein Beispiel für ein erfindungsgemäßes Verfahren,
Fig. 1b: ein Beispiel für ein erfindungsgemäßes Verfahren,
Fig. 2: ein weiteres Beispiel für ein erfindungsgemäßes Verfahren, und
Fig. 3 ein weiteres Beispiel für ein erfindungsgemäßes Verfahren.

In den nachfolgenden Figuren werden für die gleichen technischen Merkmale auch von unterschiedlichen Ausführungsbeispielen die identischen Bezugszeichen verwendet.

Die Erfindung besteht darin, ein Punktesystem zu schaffen, das von einem Handwerker verwendet werden kann, um seinen Kunden zu zeigen, wie viel Erfahrung er besitzt in Bezug auf Zeit, Werkzeuge, Anwendungen, Projekte oder Standorte. Andererseits kann dasselbe System auch von Kunden genutzt werden, um einen geeigneten Handwerker auf Basis der angezeigten Kennzahlen für einen bestimmten Auftrag zu finden. Sie können dasselbe System auch nutzen, um den Handwerker zu sehen, zu überprüfen und zu bewerten, wie er seine Arbeit erledigt hat.

Dabei können zur Durchführung des erfindungsgemäßen Verfahrens Daten oder Datenwerte z. B. von intelligenten Maschinen, wie beispielsweise von Elektrowerkzeugen, von einer Cloudeinrichtung oder mittels sozialer Medien gesammelt werden, um eine Kennzahl zu ermitteln. Die gesammelten Daten werden analysiert und ausgewertet. Dabei kann eine solche Datenanalyse auch z.B. statistische Daten aus anderen Datenspeichern oder -banken umfassen, um eine Bewertung mittels einer oder mehrerer Kennzahlen zu bestimmen. Ferner können bei der Durchführung des erfindungsgemäßen Verfahrens überprüfbare und/oder zertifizierte und/oder quantifizierbare Daten über die Arbeit, die von einem Handwerker ausgeführt wird, gesammelt werden

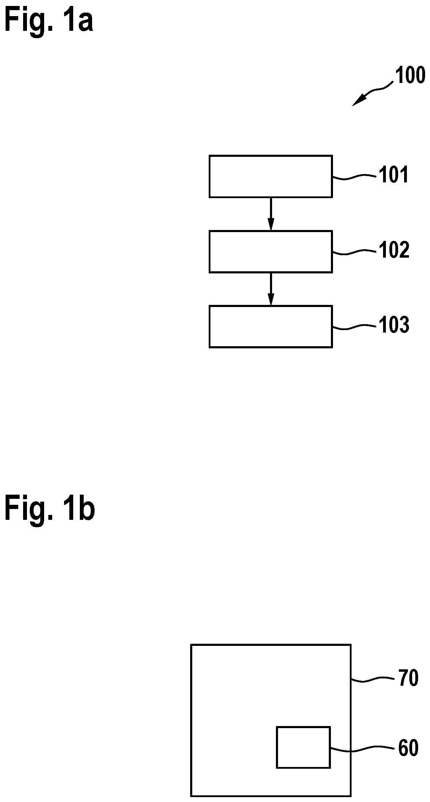

In Fig. 1a ist schematisch ein Beispiel für einen Ablauf eines erfindungsgemäßen Verfahrens gezeigt. In Fig. 1a abgebildet ist ein erfindungsgemäßes Verfahren zum Bereitstellen von Kennzahlen für einen Benutzer wenigstens eines Elektrowerkzeugs, wobei die folgenden Schritte durchgeführt werden. In Schritt 101 werden zunächst Datenwerte bezüglich des wenigstens einen Elektrowerkzeugs und/oder bezüglich des Benutzers des wenigstens einen Elektrowerkzeugs gesammelt, wobei die Datenwerte zumindest teilweise einer Tätigkeit des Benutzers mit dem wenigstens einen Elektrowerkzeug zugeordnet sind. Anschließend wird in Schritt 102 wenigstens eine Kennzahl für den Benutzer auf Basis der gesammelten Datenwerte und einer Auswertungsfunktion ermittelt, wobei die Kennzahl für die Qualität der Tätigkeiten des Benutzers mit dem wenigstens einen Elektrowerkzeug spezifisch ist. Sodann wird in Schritt 103 die ermittelte wenigstens eine Kennzahl für den Benutzer ausgegeben.

In Fig. 1b ist ein Computerprogramm 60 dargestellt, welches Befehle umfasst, die bei der Ausführung des Programms durch einen Computer 70 diesen veranlassen, die Schritte des Verfahrens 100 gemäß Ausführungsbeispielen der Erfindung auszuführen. Ebenfalls ist eine Vorrichtung 70 zur Datenverarbeitung abgebildet, wobei diese Datenverarbeitungsvorrichtung 70 Mittel zur Ausführung der Schritte eines Verfahren 100 gemäß Ausführungsbeispielen der Erfindung umfassen kann.

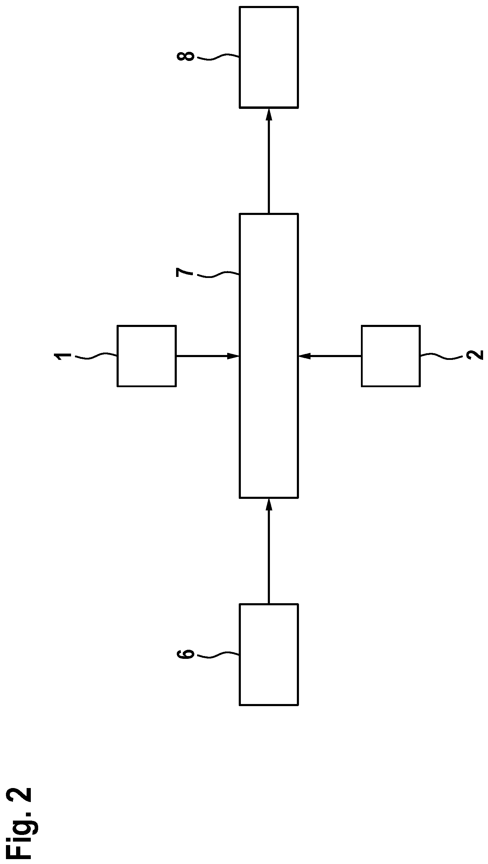

In Fig. 2 ist eine schematische Übersicht als Beispiel dargestellt, die zeigt, welche Daten 1,2 für ein Ermitteln einer Kennzahl verwendet werden können. Ferner stellt Fig. 2 dar, wie die Daten 1,2 verarbeitet werden können. Dabei umfassen die Daten Informationen bezogen auf
- Daten bezüglich des Benutzers, insbesondere Handwerkers, 1,
- Daten bezüglich des Elektrowerkzeugs 2,

In Fig. 2 wird dargestellt, dass Daten 1,2 zunächst gesammelt 6 werden, um dann mittels einer Auswertungsfunktion 7, insbesondere einem Algorithmus 7, so bearbeitet werden, dass eine Kennzahl ermittelt und visualisiert 8 werden kann. Dabei werden alle überprüfbaren und/oder zertifizierten und/oder quantifizierbaren und/oder rohen Daten automatisiert gesammelt. Darunter fallen auch jene Daten über die von einem Benutzer, insbesondere einem Arbeiter oder Handwerker, ausgeführten Tätigkeiten.

Die gesammelten Daten 1,2 können dann im Rahmen einer Datenauswertung unter Anwendung eines vorgegebenen Algorithmus als Kennzahl bezüglich der Qualität der Tätigkeiten des Benutzers ermittelt werden. Dies kann optional in Form eines digitalen Zwillings 8 für den Benutzer erfolgen.

Im Rahmen der Datenanalyse können auf Basis einer sogenannten komplexe Analyse und/oder anderer Analysemethoden weitere oder erweiterte Informationen bezüglich der Güte generiert werden. Die komplexe Analyse berücksichtigt dafür beispielsweise ein multidimensionales Datenmodell.

Außerdem können Erkenntnisse aus einer kognitiven Analyse, d.h. unter Einbeziehung z.B. von Daten anderer Benutzer oder anderer Märkte, um einen oder mehrere Kennzahlen zu ermitteln. Optional kann auch auf Methoden des maschinellen Lernens dabei helfen, zu entscheiden, welche Daten zu integrieren sind, um Kennzahlen zu bestimmen. Der Algorithmus kann selbstlernend sein oder mittels künstlicher Intelligenz unterstützt werden.

Je nach Analyseergebnis kann die Kennzahl für einen Benutzer zusammenfassend beispielsweise mit einer Punktzahl bewertet werden, um das qualitätsorientierte Tätigsein darzustellen. Mit anderen Worten werden Daten gesammelt, mittels eines oder mehrerer Algorithmen analysiert und ausgewertet und dabei Kennzahlen für die Qualität bestimmt, die visualisiert 8 werden können. Mit anderen Worten werden Daten gesammelt, mittels eines oder mehrerer Algorithmen analysiert und ausgewertet und dabei Kennzahlen für eine Qualität bestimmt, die visualisiert 8 werden können.

Auf Basis der automatisierten Datenerfassung und -auswertung von in Verwendung befindlichen Elektrowerkzeugen des Benutzers können Änderungen bei einer oder mehreren Kennzahlen sofort, d.h. in Echtzeit, angepasst werden.

Einzelne Kennzahlen kann je nach Zielgruppe vom Benutzer individuell angepasst werden, d. h., dass bestimmte Kennzahlen bezüglich der Qualität beispielsweise durch einen Filtermechanismus auf der Benutzeroberfläche eines Computers oder eines jeweiligen Portals oder Programms bestimmte Kennzahlen ausgeblendet oder eingeblendet werden können. Ebenso kann vorgesehen sein, dass dies auch auf einem mobilen Endgerät wie z.B. einem Tablet-Computer oder einem Smartphone durchgeführt wird.

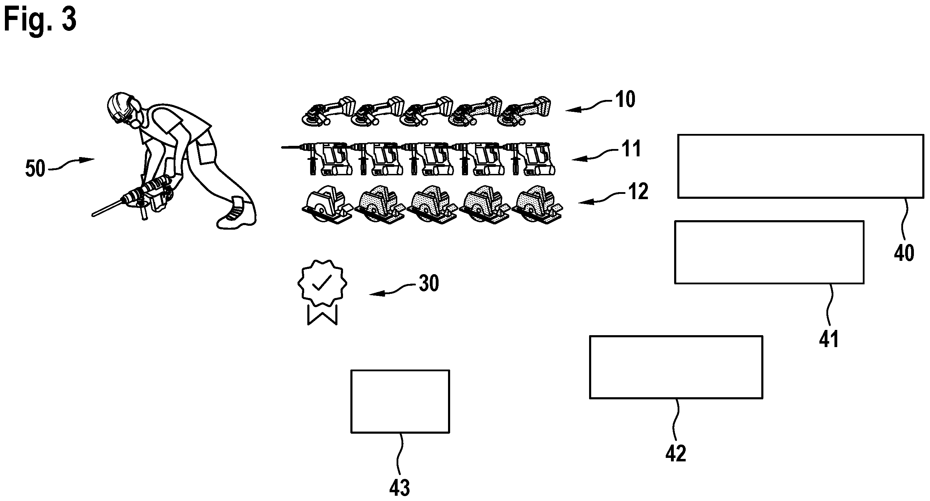

Ferner kann beispielsweise ein Eingabelink 30 gemäß Fig. 3 vorgesehen sein, damit ein Kunde ein Feedback in Form einer Bewertung eingeben. So kann er eine qualitäts- und erfahrungsorientierte Bewertung des Handwerkers oder Arbeiters beeinflussen. Parallel kann durch die Auswertung der erfassten Daten von dem wenigstens einen Elektrowerkzeug während der Tätigkeiten bei dem Kunden eine relative Bestätigung der Bewertung erfolgen. Dies kann den Nachweis einer Objektivität der Bewertung des Kunden durch die Anwendung des erfindungsgemäßen Verfahrens transparenter machen und deutlich verbessern.

In Fig. 3 ist ein Beispiel für eine Visualisierung von mehreren Kennzahlen für den Handwerker dargestellt. Der Handwerker ist dabei als Symbol 50 dargestellt. Es sind Kennzahlen 10, 11, 12, 20 für eine Bewertung der Qualität, insbesondere Expertise und Erfahrung, abgebildet. Diese Kennzahlen können beispielsweise auf einer Benutzeroberfläche eines Computers oder eines Web-Portals dargestellt sein. Eine erste Kennzahl 10 ist als eine Kennzahl für eine Kompetenz und Expertise beim Winkelschleifen grafisch in Form von Winkelschleifer-Symbolen dargestellt. Die Anzahl der farbigen Symbole beträgt drei von maximal fünf. Dies bedeutet beispielsweise eine überdurchschnittliche Erfahrung des Handwerkers.

Eine weitere Kennzahl 11 ist für die Bewertung der Expertise beim Umgang mit Bohrhämmern dargestellt, wobei der Expertise-Level mit fünf von fünf möglichen Bohrhammer-Symbolen als maximal mögliche Bewertung, d.h. Experte für Bohrhämmer abgebildet ist. Ein dritte Kennzahl 12 ist für die Bewertung der Expertise beim Umgang mit Kreissägen grafisch dargestellt. Hier wird die Wertung mit Kreissäge-Symbolen abgebildet. Bei diesem Beispiel wird eines von fünf möglichen Symbolen farbig abgebildet, was bedeutet das der betroffene Handwerker als Anfänger beim Umgang mit Kreissägen eingestuft. Für die Kennzahlen 10, 11, 12 gilt, dass je mehr Symbol farbig dargestellt werden desto besser ist die Bewertung für den Handwerker.

Ein Eingabelink 30 wird auf der Benutzeroberfläche abgebildet, welcher die Möglichkeit bietet, eine Bewertung für den Handwerker einzugeben, wenn der abgebildete Link als Symbol 30 dargestellt angeklickt wird.

Ferner ist für jede der dargestellten Kennzahlen 10, 11, 12 wenigstens eine weitere zusätzliche Detailinformation in einem Anzeigefenster 40, 41, 42, 43 bezüglich der jeweiligen Kennzahl 10, 11, 12 hinterlegt. Die Detailinformation kann optional auch z.B. über einen Web-Link 40, 41, 42, 43 angezeigt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bereitstellen von Kennzahlen für einen Benutzer wenigstens eines Elektrowerkzeugs, umfassend die nachfolgenden Schritte:
- Sammeln (101) von Datenwerten bezüglich des wenigstens einen Elektrowerkzeugs und/oder bezüglich des Benutzers des wenigstens einen Elektrowerkzeugs, wobei die Datenwerte zumindest teilweise einer Tätigkeit des Benutzers mit dem wenigstens einen Elektrowerkzeug zugeordnet sind,
- Ermitteln (102) wenigstens einer Kennzahl für den Benutzer auf Basis der gesammelten Datenwerte und einer Auswertungsfunktion (7), wobei die Kennzahl für die Qualität der Tätigkeiten des Benutzers mit dem wenigstens einen Elektrowerkzeug spezifisch ist,
- Ausgeben (103) der ermittelten wenigstens einen Kennzahl für den Benutzer.

2. Verfahren (100) nach Anspruch 1,
**dadurch gekennzeichnet,**
**dass** das Ausgeben (103) der ermittelten wenigstens einen Kennzahl den nachfolgenden Schritt umfasst:
- Anzeigen der wenigstens einen Kennzahl auf einer Benutzeroberfläche, wobei die Benutzeroberfläche einen digitalen Zwilling (8) des Benutzers visualisiert.

3. Verfahren (100) nach Anspruch 2,
**dadurch gekennzeichnet,**
**dass** eine computergestützte Autorisierung eines Nutzers durchgeführt wird, um einen Zugang zu der Benutzeroberfläche zu erhalten.

4. Verfahren (100) nach einem der vorhergehenden Ansprüche,
**dadurch gekennzeichnet,**
**dass** die vorgegebene Auswertungsfunktion (7) anhand der gesammelten Datenwerte die wenigstens eine Kennzahl ermittelt, wobei vorzugsweise die Kennzahl als wenigstens eine der folgenden Kennzahlen für eine Bewertung der Qualität ausgeführt ist:
- Expertise eines Benutzers mit einem bestimmten Typ eines Elektrowerkzeugs,
- Expertise eines Benutzers für ein bestimmtes Gewerk,
- Flexibilität und Reaktionsfähigkeit eines Benutzers für Projekte unter Zeitdruck,
- Preis-Leistungs-Verhältnis.

5. Verfahren (100) nach einem der vorhergehenden Ansprüche,
**dadurch gekennzeichnet,**
**dass** die Auswertungsfunktion (7) die gesammelten Datenwerte auf Basis eines multidimensionalen Datenmodells analysiert und auswertet, wobei eine Dimension die gesammelten Datenwerte aus unterschiedlichen Perspektiven, vorzugsweise Zeit und/oder Region und/oder Unternehmen und/oder Wettbewerb und/oder Branche und/oder Markt, spezifiziert, und/oder dass die Datenwerte aus unterschiedlichen Datenquellen empfangen werden, wobei die Auswertungsfunktion (7) die gesammelten Datenwerte aus den unterschiedlichen Datenquellen für die Auswertung berücksichtigt.

6. Verfahren (100) nach einem der vorhergehenden Ansprüche,
**dadurch gekennzeichnet,**
**dass** die Auswertungsfunktion (7) eine oder mehrere von folgenden Datenminingfunktionen für die Analyse der Datenwerte umfasst: eine Verschlüsselungsfunktion, eine Standardisierungsfunktion, eine Harmonisierungsfunktion, eine Aggregierungsfunktion, eine k-Anonymitätsfunktion oder eine Datenmaskierungsfunktion.

7. Computerprogramm (60), umfassend Befehle, die bei der Ausführung des Computerprogramms (60) durch einen Computer (70) diesen veranlassen, das Verfahren (100) nach einem der vorhergehenden Ansprüche auszuführen.

8. Vorrichtung (70) zur Datenverarbeitung, die eingerichtet ist, das Verfahren (100) nach einem der Ansprüche 1 bis 6 auszuführen.
